# EUROPEAN PATENT APPLICATION

(11) **EP 4 701 025 A1**
(43) Date of publication of application: **25.02.2026**
(21) Application number: 24195550.9
(22) Date of filing: 21.08.2024
(51) Int. Cl.: H02J 3/36

(54) **POWER FLOW CONTROLLER FOR HVDC GRIDS**

(71) Applicant: Hitachi Energy Ltd, 8050 Zürich (CH)
(72) Inventor: Dijkhuizen, Frans, 726 31 Skultuna (SE); Bhadoria, Shubhangi, 171 71 Solna (SE); Nee, Hans-Peter, 197 34 Bro (SE)
(74) Representative: AWA Sweden AB

(57) **Abstract**

The present disclosure relates to a power flow controller (PFC) for controlling power flow within a high voltage direct current, HVDC, transmission system (S). The power flow controller comprises a first node (1), a second node (2) and a third node (3). The first node (1) is connectable to a first substation (P1) of the HVDC transmission system (S) via a first HVDC transmission line (1000). The second node (2) is connectable to a second substation (P2) of the HVDC transmission system (S) via a second HVDC transmission line (2000). The third node (3) is connectable to a third substation (P3) of the HVDC transmission system (S). The power flow controller (PFC) further comprises a first controllable switch (11) and a first switching element (12). The power flow controller (PFC) is configured to control a first power flow in the first HVDC transmission line (1000) and a second power flow in the second HVDC transmission line (2000) by controlling a duty cycle for activation of the first controllable switch (11).

## Description

### Technical Field

The invention relates to a power flow controller for controlling power flow within a high voltage direct current (HVDC) transmission system.

### Background

High voltage direct current (HVDC) transmission systems are configured to transmit electrical power, in the form of direct current, throughout a grid. The HVDC grid comprises a system of terminals and transmission lines where each transmission line connects one terminal to another. As compared to high voltage alternating current (HVAC) transmission systems, HVDC transmission systems are more energy efficient when the transmission lines are long. For instance, HVDC transmission systems are often employed to connect offshore wind farms to the mainland grid, or to transmit electrical power from remote renewable energy sources, such as hydroelectric plants and solar farms, to urban centers.

However, controlling the power flow in an HVDC transmission system is increasingly difficult as the number of transmission lines increases. As a result, one or more transmission lines may experience power congestion.

In the prior art, numerous solutions have been proposed addressing the issue of power congestion in HVDC transmission systems. However, traditional power flow controllers have complex topologies, with higher and higher complexity as the number of transmission lines increases. As a result, traditional power flow controllers suffer from a number of drawbacks, such as disproportionate cost, intricate driving circuitry, and limited operational range due to excessive power losses.

Therefore, there is a need for improved power flow controllers for HVDC grids.

### Summary

It is an objective of the present disclosure to provide a power flow controller with a less complex topology for HVDC grids, while still limiting power congestion in the transmission lines of the HVDC grids.

This and other objectives are at least partly met by the invention as defined by the claims. Various aspects of the disclosure and embodiments thereof are summarized in the following.

According to a first aspect of the present invention, there is provided a power flow controller for controlling power flow within a high voltage direct current (HVDC) transmission system. The power flow controller comprises a first node, a second node and a third node. The first node is connectable to a first substation of the HVDC transmission system via a first HVDC transmission line. The second node is connectable to a second substation of the HVDC transmission system via a second HVDC transmission line. The third node is connectable to a third substation of the HVDC transmission system. The power flow controller further comprises a first controllable switch and a first switching element. The first controllable switch is connected between the first node and a first connection point of the power flow controller. The first switching element is connected between the first connection point and the second node. The power flow controller further comprises a first inductor, a first capacitive element and a second capacitive element. The first inductor is connected between the first connection point and the third node. The first capacitive element is connected between the first node and the third node. The second capacitive element is connected between the second node and the third node. The power flow controller is configured to control a first power flow in the first HVDC transmission line and a second power flow in the second HVDC transmission line by controlling a duty cycle for activation of the first controllable switch.

The HVDC transmission system is hereinafter interchangeably referred to as an HVDC grid.

It should be realized that the power flow in a transmission line of an HVDC transmission system depends on the resistance of the transmission line and the voltage over the transmission line. The power flow controller according to the present invention is configured to transfer electrical power between the first HVDC transmission line and the second HVDC transmission line by adjusting the respective voltage over the first HVDC transmission line and the second HVDC transmission line. Thus, power congestion in the first HVDC transmission line and second HVDC transmission line may be avoided, or at least reduced.

The first capacitive element adjusts the voltage over the first HVDC transmission line by adjusting the potential of the first node relative to the third node. In other terms, the first capacitive element is configured to insert a first voltage into the first HVDC transmission line. Thus, the power flow in the first HVDC transmission line may be adjusted. It should be noted that the first voltage is a voltage over the first capacitive element, i.e. a potential difference between the first node and the third node.

Likewise, the second capacitive element adjusts the voltage over the second HVDC transmission line by adjusting the potential of the second node relative to the third node. In other terms, the second capacitive element is configured to insert a second voltage into the second HVDC transmission line. Thus, the power flow in the second HVDC transmission line may be adjusted. It should be noted that the second voltage is a voltage over the second capacitive element, i.e. a potential difference between the second node and the third node.

It should be realized that neither the first capacitive element nor the second capacitive element requires a dedicated power supply to insert a respective voltage. In other terms, the first capacitive element is configured to be charged by the first power flow through the first HVDC transmission line, without the need for additional power supply. Likewise, the second capacitive element is configured to be charged by the second power flow via the second HVDC transmission line, without the need for additional power supply. The lack of a dedicated power supply for the voltage insertion is advantageous, as it reduces the complexity and cost of the power flow controller.

Each of the first controllable switch and first switching element may be in a conducting state or a non-conducting state. The first controllable switch may be activated by a first activation signal to be in a conducting state. By controlling a duty cycle of the first activation signal, the first controllable switch may be activated and de-activated.

A duty cycle of an activation signal of a controllable switch is a ratio between a first time duration and a second time duration. The first time duration is the time during which the activation signal is configured to activate the controllable switch. The second time duration is the sum of the time during which the activation signal is configured to activate the controllable switch and the time during which the activation signal is configured to de-activate the controllable switch.

When the first controllable switch is in a conducting state, energy may be transferred from the first capacitive element to the first inductor, or vice versa, depending on the voltage over the first capacitive element. Likewise, when the first switching element is in a conducting state, energy may be transferred from the first inductor to the second capacitive element, or vice versa, depending on the voltage over the second capacitive element. When the current flowing in the first inductor increases with time, energy is being transferred to the first inductor. Vice versa, when the current in the first inductor decreases with time, energy is being transferred out of the first inductor.

Therefore, by controlling a duty cycle of the first activation signal, energy may be transferred from the first capacitive element to the first inductor and, subsequently, from the first inductor to the second capacitive element. Thus, energy is transferred from the first capacitive element to the second capacitive element with the first inductor serving as an energy buffer. As a result, the first power flow decreases and the second power flow increases, i.e. power is transferred from the first HVDC transmission line to the second HVDC transmission line.

Likewise, by controlling a duty cycle of the first activation signal, energy may be transferred from the second capacitive element to the first inductor and, subsequently, from the first inductor to the first capacitive element. Thus, energy is transferred from the second capacitive element to the first capacitive element with the first inductor serving as an energy buffer. As a result, the second power flow decreases and the first power flow increases, i.e. power is transferred from the second HVDC transmission line to the first HVDC transmission line.

It should be realized that the number of controllable switches strongly affects the complexity of traditional power flow controllers. As the number of controllable switches increases, the circuitry for selectively activating and de-activating the controllable switches becomes increasingly complex. In addition, the overall cost of the power flow controller rises steeply. Furthermore, the total power consumption increases. Advantageously, the power flow controller according to the present invention comprises a limited number of controllable switches.

It should be noted that the first voltage and second voltage are not independent of each other. Instead, the ratio between the first voltage and second voltage depends on the duty cycle of the first activation signal.

As already mentioned, the first voltage and the second voltage are inserted into the first HVDC transmission line and second HVDC transmission line, respectively. In other terms, the first voltage and the second voltage are neither added to each other, nor subtracted from one another, when inserted into the respective HVDC transmission line. As a result, although the first voltage and the second voltage are dependent on each other based on the duty cycle of the first activation signal, the first capacitive element and the second capacitive element are configured to individually adjust the voltage over the first HVDC transmission line and second HVDC transmission line, respectively.

The power flow controller is configured in such a way that the first voltage and the second voltage have opposite polarities. In other words, when the first node is at a lower potential as compared to the third node, the second node is at a higher potential as compared to the third node, and vice versa. By convention, the first voltage is hereinafter assumed to be positive when the first node is at a lower potential as compared to the third node. Similarly, the second voltage is hereinafter assumed to be positive when the second node is at a higher potential as compared to the third node. Therefore, when the first voltage is positive, the second voltage is also positive. Likewise, when the first voltage is negative, the second voltage is also negative.

It should be also mentioned that the power flow controller according to the present invention may facilitate dampening of oscillations in time which may occur in any current or voltage of the HVDC transmission system. In other terms, a change in any of the first power flow and the second power flow of the HVDC transmission system, working in a first DC operating condition, may induce oscillations in time of any current or voltage of the HVDC transmission system. When the HVDC transmission system is stable, these oscillations are progressively dampened, and the HVDC transmission system eventually transitions to a second DC operating condition. The change in any of the first power flow and the second power flow may be a steep change, e.g. a change according to a step function, a ramp function or any other function of time resulting in oscillations of any current or voltage of the HVDC transmission system.

When oscillations are induced, the power flow controller is useful to control the first power flow and the second power flow such that power congestion in the first HVDC transmission line and the second HVDC transmission line is avoided, or at least reduced. Furthermore, the power flow controller may facilitate dampening of the oscillations. In other terms, the oscillations die out faster thanks to the control action of the power flow controller. As a result, the stability of the HVDC transmission system is improved.

Advantageously, the power flow controller may also improve harmonic filtering, i.e. facilitate filtering of current or voltage components at undesired frequencies that may propagate throughout the HVDC transmission system.

According to an embodiment, the first controllable switch, in a conducting state of the first controllable switch, is configured to support an inflow of current to the first connection point. In a conducting state of the first switching element, the first switching element is configured to support an inflow of current to the first connection point.

In other terms, the first controllable switch is connected between the first node and the first connection point such that, in a conducting state of the first controllable switch, current may flow through the first controllable switch from the first node to the first connection point. Similarly, the first switching element is connected between the second node and the first connection point such that, in a conducting state of the first switching element, current may flow through the first switching element from the second node to the first connection point.

Thus, when energy is transferred from the first capacitive element to the first inductor, current may flow in the first inductor in the same direction, i.e. from the first connection point to the third node, as when energy is transferred from the first inductor to the second capacitive element. Likewise, when energy is transferred from the second energy storage element to the first inductor, current may flow in the first inductor in the same direction, i.e. from the first connection point to the third node, as when energy is transferred from the first inductor to the first energy storage element.

According to an embodiment, the first controllable switch, in a conducting state of the first controllable switch, is configured to support an outflow of current from the first connection point. Furthermore, in a conducting state of the first switching element, the first switching element is configured to support an outflow of current from the first connection point.

In other terms, the first controllable switch is connected between the first node and the first connection point such that, in a conducting state of the first controllable switch, current may flow through the first controllable switch from the first connection point to the first node. Similarly, the first switching element is connected between the second node and the first connection point such that, in a conducting state of the first switching element, current may flow through the first switching element from the first connection point to the second node.

Thus, when energy is transferred from the first capacitive element to the first inductor, current may flow in the first inductor in the same direction, i.e. from the third node to the first connection point, as when energy is transferred from the first inductor to the second capacitive element. Likewise, when energy is transferred from the second capacitive element to the first inductor, current may flow in the first inductor in the same direction, i.e. from the third node to the first connection point, as when energy is transferred from the first inductor to the first capacitive element.

According to an embodiment, the first node and the third node form a first port, the second node and the third node form a second port, and the power flow controller further comprises at least one of the following: a first protection circuit comprising a first discharging branch connectable in parallel to the first port; and a second protection circuit comprising a second discharging branch connectable in parallel to the second port.

It will be appreciated that, in any of the embodiments herein provided and any variation thereof, the first node and the third node form a first pair of nodes, i.e. a first port. As already mentioned, the first capacitive element is connected between the first node and the third node. Thus, the first discharging branch, connectable in parallel to the first port, may be activated in order to discharge the first capacitive element when a fault is detected in the HVDC grid and the first voltage is, in absolute value, larger than a first threshold. The first threshold may be equal to zero, but other values are also conceivable.

Similarly, it will be appreciated that, in any of the embodiments herein provided and any variation thereof, the second node and the third node form a second pair of nodes, i.e. a second port. As already mentioned, the second capacitive element is connected between the second node and the third node. Thus, the second discharging branch, connectable in parallel to the second port, may be activated in order to discharge the second capacitive element when a fault is detected in the HVDC grid and the second voltage is, in absolute value, larger than a second threshold. The second threshold may be equal to zero, but other values are also conceivable.

It should be realized that a fault is a disturbance, such as an overcurrent, an overvoltage, or a maintenance, that occurs to the normal operating conditions of the HVDC transmission system.

Discharging at least one of the first capacitive element and second capacitive element of the power flow controller is useful to reduce the risk of damages to the power flow controller which may be caused by the fault.

The first protection circuit may comprise a first voltage-regulating branch connected in parallel to the first port. The first voltage-regulating branch may be activated in order to prevent the first capacitive element from charging or discharging when a fault is detected in the HVDC grid and the first voltage is, in absolute value, smaller than the first threshold.

Likewise, the second protection circuit may comprise a second voltage-regulating branch connected in parallel to the second port. The second voltage-regulating branch may be activated in order to prevent the second capacitive element from charging or discharging when a fault is detected in the HVDC grid and the second voltage is, in absolute value, smaller than the second threshold.

Regulating at least one of the first voltage and the second voltage as described above is useful to reduce the risk of damages to the power flow controller which may be caused by the fault.

According to an embodiment, at least one of the following applies: the first protection circuit further comprises a first bypass branch connectable in parallel to the first port; and the second protection circuit further comprises a second bypass branch connectable in parallel to the second port.

The first bypass branch may be activated in order to bypass the first capacitive element when a fault is detected in the HVDC grid and the first voltage is, in absolute value, smaller than the first threshold.

Similarly, the second bypass branch may be activated in order to bypass the second capacitive element when a fault is detected in the HVDC grid and the second voltage is, in absolute value, smaller than the second threshold.

Bypassing at least one of the first capacitive element and second capacitive element is useful to prevent current from flowing through the at least one of the first capacitive element or second capacitive element that is bypassed. As a result, the risk of damages to the power flow controller, which may be caused by the fault, is reduced.

It should be realized that, when both the first bypass branch and the second bypass branch are activated, the power flow controller as a whole is bypassed.

According to an embodiment, the power flow controller further comprises: a second controllable switch, a second switching element, and a second inductor, wherein the second controllable switch is connected to the second switching element at a second connection point of the power flow controller and the second inductor is connected between the second connection point and the third node. The power flow controller further comprises a third capacitive element, connected between the third node and a fourth node of the power flow controller, wherein the fourth node is connectable to a fourth substation of the HVDC transmission system via a third HVDC transmission line. One of the following alternatives applies: either the second controllable switch is further connected to the first node and the second switching element is further connected to the fourth node; or the second controllable switch is further connected to the second node and the second switching element is further connected to the fourth node; or the second switching element is further connected to the first node and the second controllable switch is further connected to the fourth node; or the second switching element is further connected to the second node and the second controllable switch is further connected to the fourth node. The power flow controller is further configured to control a third power flow in the third HVDC transmission line by controlling a duty cycle for activation of the second controllable switch.

The power flow controller according to this embodiment is advantageous because, as well as being configured to control the first power flow and the second power flow, it is further configured to control the third power flow without a significant increase in the complexity of the topology of the power flow controller. In other terms, the power flow controller is configured to transfer electrical power between at least two of the first HVDC transmission line, the second HVDC transmission line and the third HVDC transmission line. Thus, power congestion in at least two of the first HVDC transmission line, second HVDC transmission line and third HVDC transmission line may be avoided, or at least reduced. At the same time, in spite of the higher complexity of the HVDC grid, which comprises a third HVDC transmission line, the topology of the power flow controller remains rather simple. Advantageously, the power flow controller still comprises a limited number of controllable switches.

It should be realized that the third capacitive element adjusts the voltage over the third HVDC transmission line by adjusting the potential of the fourth node relative to the third node. In other terms, the third capacitive element is configured to insert a third voltage into the third HVDC transmission line. Thus, the third power flow may be adjusted. It should be noted that the third voltage is, in the present embodiment, a voltage over the third capacitive element, i.e. a potential difference between the fourth node and the third node.

Similarly to the first capacitive element and second capacitive element, the third capacitive element does not require a dedicated power supply to insert the third voltage. In other terms, the third capacitive element is configured to be charged by the third power flow through the third HVDC transmission line, without the need for additional power supply. The lack of a dedicated power supply for the insertion of the third voltage is advantageous, as it reduces the complexity and cost of the power flow controller.

Considerations made on the first controllable switch and the first switching element apply, mutatis mutandis, to the second controllable switch and the second switching element. Thus, each of the second controllable switch and second switching element may be in a conducting state or a non-conducting state. The second controllable switch may be activated by a second activation signal to be in a conducting state. By controlling a duty cycle of the second activation signal, the second controllable switch may be activated and de-activated.

When any of the second controllable switch and the second switching element is connected to the first node, considerations made on the transfer of energy between the first capacitive element and the second capacitive element, with the first inductor serving as an energy buffer, apply, mutatis mutandis, to the first capacitive element, the second inductor and the third capacitive element. Therefore, by controlling a duty cycle of the second activation signal, energy may be transferred between the first capacitive element and the third capacitive element with the second inductor serving as an energy buffer. As a result, power is transferred between the first HVDC transmission line and the third HVDC transmission line.

Likewise, when any of the second controllable switch and the second switching element is connected to the second node, considerations made on the transfer of energy between the first capacitive element and the second capacitive element, with the first inductor serving as an energy buffer, apply, mutatis mutandis, to the second capacitive element, the second inductor and the third capacitive element. Therefore, by controlling a duty cycle of the second activation signal, energy may be transferred between the second capacitive element and the third capacitive element with the second inductor serving as an energy buffer. As a result, power is transferred between the second HVDC transmission line and the third HVDC transmission line.

It should be noted that, when any of the second controllable switch and the second switching element is connected to the first node, the power flow controller is configured in such a way that the first voltage and the third voltage have opposite polarities. By convention, the third voltage, in this embodiment, is assumed to be positive when the fourth node is at a lower potential as compared to the third node. Therefore, when the first voltage is positive, the third voltage is also positive. Likewise, when the first voltage is negative, the third voltage is also negative. It should be also noted that the first voltage and the third voltage are neither added to each other, nor subtracted from one another, when inserted into the respective HVDC transmission line.

Similarly, when any of the second controllable switch and the second switching element is connected to the second node, the power flow controller is configured in such a way that the second voltage and the third voltage have opposite polarities. By convention, the third voltage, in this embodiment, is assumed to be positive when the fourth node is at a lower potential as compared to the third node. Therefore, when the second voltage is positive, the third voltage is also positive. Likewise, when the second voltage is negative, the third voltage is also negative. It should be also noted that the second voltage and the third voltage are neither added to each other, nor subtracted from one another, when inserted into the respective HVDC transmission line.

According to an embodiment, the power flow controller further comprises a third capacitive element and a fourth capacitive element. The third capacitive element is connected between the second node and a fourth node of the power flow controller, the fourth node being connectable to the second substation of the HVDC transmission system via the second HVDC transmission line. The fourth capacitive element is connected between the second node and a fifth node of the power flow controller (PFC), wherein the fifth node is connectable to a fourth substation of the HVDC transmission system via a third HVDC transmission line. The power flow controller further comprises a second controllable switch, a second switching element and a second inductor. The second controllable switch is connected to the second switching element at a second connection point of the power flow controller. The second inductor is connected between the second connection point and the second node. One of the following alternatives applies: either the second controllable switch is further connected to the fourth node and the second switching element is further connected to the fifth node; or the second switching element is further connected to the fourth node and the second controllable switch is further connected to the fifth node. The power flow controller is further configured to control a third power flow in the third HVDC transmission line by controlling a duty cycle for activation of the second controllable switch.

The power flow controller according to this embodiment is advantageous because, as well as being configured to control the first power flow and the second power flow, it is further configured to control the third power flow without a significant increase in the complexity of the topology of the power flow controller. In other terms, the power flow controller is configured to transfer electrical power between at least two of the first HVDC transmission line, the second HVDC transmission line and the third HVDC transmission line. Thus, power congestion in at least two of the first HVDC transmission line, second HVDC transmission line and third HVDC transmission line may be avoided or at least reduced. At the same time, in spite of the higher complexity of the HVDC grid, which comprises a third HVDC transmission line, the topology of the power flow controller remains rather simple. Advantageously, the power flow controller still comprises a limited number of controllable switches.

It should be realized that the third capacitive element adjusts the voltage over the second HVDC transmission line by adjusting the potential of the fourth node relative to the second node. In other terms, the third capacitive element is configured to insert a third voltage into the second HVDC transmission line. Thus, the second power flow may be adjusted. It should be noted that the third voltage is, in the present embodiment, a voltage over the third capacitive element, i.e. a potential difference between the fourth node and the second node. Therefore, the third voltage and the second voltage are added to each other, or subtracted from one another, when inserted into the second HVDC transmission line. As a result, the potential of the fourth node relative to the third node is adjusted.

The addition or subtraction of the second voltage and the third voltage is advantageous as it provides two degrees of freedom (i.e., the second voltage and the third voltage) to achieve a given adjustment of the voltage over the second HVDC transmission line. In other terms, with a same second capacitive element, the power flow controller according to the present embodiment may provide larger or smaller adjustments of the voltage over the second HVDC transmission line as compared to other embodiments in which the voltage over the second HVDC transmission line is adjusted by inserting only the second voltage.

Similarly, the fourth capacitive element adjusts the voltage over the third HVDC transmission line by adjusting the potential of the fifth node relative to the second node. In other terms, the fifth capacitive element is configured to insert a fourth voltage into the third HVDC transmission line. Thus, the third power flow may be adjusted. It should be noted that the fourth voltage is, in the present embodiment, a voltage over the fourth capacitive element, i.e. a potential difference between the fifth node and the second node. Therefore, the fourth voltage and the second voltage are added to each other, or subtracted from one another, when inserted into the third HVDC transmission line. As a result, the potential of the fifth node relative to the third node is adjusted.

The addition or subtraction of the second voltage and the fourth voltage is advantageous as it provides two degrees of freedom (i.e., the second voltage and the fourth voltage) to achieve a given adjustment of the voltage over the third HVDC transmission line. In other terms, with a same second capacitive element, the power flow controller according to the present embodiment may provide larger or smaller adjustments of the voltage over the third HVDC transmission line as compared to other embodiments in which the voltage over the third HVDC transmission line is adjusted by inserting only a voltage over a single capacitive element.

It should be realized that, similarly to the first capacitive element and second capacitive element, neither the third capacitive element nor the fourth capacitive element requires a dedicated power supply to insert the third voltage and the fourth voltage, respectively. In other terms, the third capacitive element is configured to be charged by the second power flow through the second HVDC transmission line, without the need for additional power supply. Similarly, the fourth capacitive element is configured to be charged by the third power flow through the third HVDC transmission line, without the need for additional power supply. The lack of a dedicated power supply for the insertion of the third voltage and fourth voltage is advantageous, as it reduces the complexity and cost of the power flow controller.

Considerations made on the first controllable switch and the first switching element apply, mutatis mutandis, to the second controllable switch and the second switching element. Thus, each of the second controllable switch and second switching element may be in a conducting state or a non-conducting state. The second controllable switch may be activated by a second activation signal to be in a conducting state. By controlling a duty cycle of the second activation signal, the second controllable switch may be activated and de-activated.

Considerations made on the transfer of energy between the first capacitive element and the second capacitive element, with the first inductor serving as an energy buffer, apply, mutatis mutandis, to the third capacitive element, the second inductor and the fourth capacitive element. Therefore, by controlling a duty cycle of the second activation signal, energy may be transferred between the third capacitive element and the fourth capacitive element with the second inductor serving as an energy buffer. As a result, power is transferred between the second HVDC transmission line and the third HVDC transmission line.

It should be noted that the power flow controller is configured in such a way that the third voltage and the fourth voltage have opposite polarities. By convention, the third voltage, in the present embodiment, is assumed to be positive when the fourth node is at a lower potential as compared to the second node. By convention, the fourth voltage, in the present embodiment, is assumed to be positive when the fifth node is at a higher potential as compared to the second node. Therefore, when the third voltage is positive, the fourth voltage is also positive. Likewise, when the third voltage is negative, the fourth voltage is also negative. It should be also noted that the third voltage and the fourth voltage are neither added to each other, nor subtracted from one another, when inserted into the respective HVDC transmission line.

According to an embodiment, the power flow controller further comprises a third capacitive element and a fourth capacitive element. The third capacitive element is connected between the first node and a fourth node of the power flow controller, the fourth node being connectable to the first substation of the HVDC transmission system via the first HVDC transmission line. The fourth capacitive element is connected between the first node and a fifth node of the power flow controller, wherein the fifth node is connectable to a fourth substation of the HVDC transmission system via a third HVDC transmission line. The power flow controller further comprises a second controllable switch, a second switching element and a second inductor. The second controllable switch is connected to the second switching element at a second connection point of the power flow controller. The second inductor is connected between the second connection point and the first node. One of the following alternatives applies: either the second controllable switch is further connected to the fourth node and the second switching element is further connected to the fifth node; or the second switching element is further connected to the fourth node and the second controllable switch is further connected to the fifth node. The power flow controller is further configured to control a third power flow in the third HVDC transmission line by controlling a duty cycle for activation of the second controllable switch.

The power flow controller according to the present embodiment is advantageous because, as well as being configured to control the first power flow and the second power flow, it is further configured to control the third power flow without a significant increase in the complexity of the topology of the power flow controller. In other terms, the power flow controller is configured to transfer electrical power between at least two of the first HVDC transmission line, the second HVDC transmission line and the third HVDC transmission line. Thus, power congestion in at least two of the first HVDC transmission line, second HVDC transmission line and third HVDC transmission line may be avoided or at least reduced. At the same time, in spite of the higher complexity of the HVDC grid, which comprises a third HVDC transmission lines, the topology of the power flow controller remains rather simple. Advantageously, the power flow controller still comprises a limited number of controllable switches.

It should be realized that the third capacitive element adjusts the voltage over the first HVDC transmission line by adjusting the potential of the fourth node relative to the first node. In other terms, the third capacitive element is configured to insert a third voltage into the first HVDC transmission line. Thus, the first power flow may be adjusted. It should be noted that the third voltage is, in the present embodiment, a voltage over the third capacitive element, i.e. a potential difference between the fourth node and the first node. Therefore, the third voltage and the first voltage are added to each other, or subtracted from one another, when inserted into the first HVDC transmission line. As a result, the potential of the fourth node relative to the third node is adjusted.

The addition or subtraction of the first voltage and the third voltage is advantageous as it provides two degrees of freedom (i.e., the first voltage and the third voltage) to achieve a given adjustment of the voltage over the first HVDC transmission line. In other terms, with a same first capacitive element, the power flow controller according to the present embodiment may provide larger or smaller adjustments of the voltage over the first HVDC transmission line as compared to other embodiments where the voltage over the first HVDC transmission line is adjusted by inserting only the first voltage.

Similarly, the fourth capacitive element adjusts the voltage over the third HVDC transmission line by adjusting the potential of the fifth node relative to the first node. In other terms, the fifth capacitive element is configured to insert a fourth voltage into the third HVDC transmission line. Thus, the third power flow may be adjusted. It should be noted that the fourth voltage is, in this embodiment, a voltage over the fourth capacitive element, i.e. a potential difference between the fifth node and the first node. Therefore, the fourth voltage and the first voltage are added to each other, or subtracted from one another, when inserted into the third HVDC transmission line. As a result, the potential of the fifth node relative to the first node is adjusted.

The addition or subtraction of the first voltage and the fourth voltage is advantageous as it provides two degrees of freedom (i.e., the first voltage and the fourth voltage) to achieve a given adjustment of the voltage over the third HVDC transmission line. In other terms, with a same first capacitive element, the power flow controller according to the present embodiment may provide larger or smaller adjustments of the voltage over the third HVDC transmission line as compared to other embodiments where the voltage over the third HVDC transmission line is adjusted by inserting only a voltage over a single capacitive element.

It should be realized that, similarly to the first capacitive element and second capacitive element, neither the third capacitive element nor the fourth capacitive element requires a dedicated power supply to insert the third voltage and the fourth voltage, respectively. In other terms, the third capacitive element is configured to be charged by the first power flow through the first HVDC transmission line, without the need for additional power supply. Similarly, the fourth capacitive element is configured to be charged by the third power flow through the third HVDC transmission line, without the need for additional power supply. The lack of a dedicated power supply for the insertion of the third voltage and fourth voltage is advantageous, as it reduces the complexity and cost of the power flow controller.

Considerations made on the first controllable switch and the first switching element apply, mutatis mutandis, to the second controllable switch and the second switching element. Thus, each of the second controllable switch and second switching element may be in a conducting state or a non-conducting state. The second controllable switch may be activated by a second activation signal to be in a conducting state. By controlling a duty cycle of the second activation signal, the second controllable switch may be activated and de-activated.

Considerations made on the transfer of energy between the first capacitive element and the second capacitive element, with the first inductor serving as an energy buffer, apply, mutatis mutandis, to the third capacitive element, the second inductor and the fourth capacitive element. Therefore, by controlling a duty cycle of the second activation signal, energy may be transferred between the third capacitive element and the fourth capacitive element with the second inductor serving as an energy buffer. As a result, power is transferred between the first HVDC transmission line and the third HVDC transmission line.

It should be noted that the power flow controller is configured in such a way that the third voltage and the fourth voltage have opposite polarities. By convention, the third voltage, in the present embodiment, is assumed to be positive when the fourth node is at a lower potential as compared to the first node. By convention, the fourth voltage, in this embodiment, is assumed to be positive when the fifth node is at a higher potential as compared to the first node. Therefore, when the third voltage is positive, the fourth voltage is also positive. Likewise, when the third voltage is negative, the fourth voltage is also negative. It should be also noted that the third voltage and the fourth voltage are neither added to each other, nor subtracted from one another, when inserted into the respective HVDC transmission line.

According to an embodiment, the second controllable switch, in a conducting state of the second controllable switch, is configured to support an inflow of current to the second connection point. In a conducting state of the second switching element, the second switching element is configured to support an inflow of current to the second connection point.

In other terms, when energy is transferred between two capacitive elements with the second inductor serving as an energy buffer, the current in the second inductor may flow in the same direction, i.e. towards the second connection point, irrespective of which of the two capacitive elements is supplying energy, and which of the two capacitive elements is receiving energy.

According to an embodiment, the second controllable switch, in a conducting state of the second controllable switch, is configured to support an outflow of current from the second connection point. In a conducting state of the second switching element, the second switching element is configured to support an outflow of current from the second connection point.

In other terms, when energy is transferred between two capacitive elements with the second inductor serving as an energy buffer, the current in the second inductor may flow in the same direction, i.e. away from the second connection point, irrespective of which of the two capacitive elements is supplying energy, and which of the two capacitive elements is receiving energy.

According to an embodiment, at least one of the following applies: the first switching element consists of a first diode; and the second switching element consists of a second diode.

As already mentioned, the number of controllable switches strongly affects the complexity of traditional power flow controllers. Therefore, when the first switching element consists of a first diode, the first switching element comprises no controllable switches, thereby reducing the complexity of the power flow controller. Similar considerations apply, mutatis mutandis, to the second switching element consisting of the second diode.

As already mentioned, limiting the number of controllable switches is advantageous in many respects. The overall cost of the power flow controller is reduced. The driving circuitry for selectively activating and de-activating the controllable switches is simplified. The total power consumption of the power flow controller decreases.

It should be realized that, as compared to controllable switches, diodes may be cheaper. Furthermore, diodes do not require an activation signal. In fact, a diode is conducting or non-conducting only depending on the voltage over the two terminals of the diode. Moreover, a diode may consume less power than a controllable switch.

According to a second aspect of the present invention, a HVDC transmission system is provided. The HVDC system comprises a first substation, a second substation, a third substation and a power flow controller according to any of the embodiments herein provided. The power flow controller connects a first HVDC transmission line, a second HVDC transmission line and the third substation. The first substation connects the first HVDC transmission line and a first additional HVDC transmission line. The second substation connects the second HVDC transmission line and the first additional HVDC transmission line. Each of the first substation, the second substation and the third substation has a respective converter configured to convert between DC power and AC power.

It will be appreciated that effects and features of this second aspect are largely analogous to those described above in connection with the first aspect.

### Brief Description of the Drawings

The above, as well as additional objects, features, and advantages of the present description, will be better understood through the following illustrative and non-limiting detailed description, with reference to the appended drawings. In the drawings, like reference numerals will be used for like elements, unless stated otherwise.
Fig. 1 is a schematic view of a HVDC transmission system comprising a power flow controller according to an embodiment, the power flow controller being configured to control the respective power flow in a first HVDC transmission line and in a second HVDC transmission line;
Fig. 2a is a schematic view of the power flow controller in Fig. 1;
Fig. 2b is a schematic view of a power flow controller according to an embodiment similar to that in Fig. 2a;
Fig. 3 is a schematic view of a power flow controller according to an embodiment similar to that in Fig. 2a;
Fig. 4 is a schematic view of an HVDC transmission system comprising a power flow controller according to an embodiment, the power flow controller being configured to control the respective power flow in a first HVDC transmission, in a second HVDC transmission line and in a third HVDC transmission line;
Fig. 5 is a schematic view of the power flow controller in Fig. 4;
Fig. 6 is a schematic view of an HVDC transmission system according to an embodiment similar to that in Fig. 4;
Fig. 7 is a schematic view of the power flow controller in Fig. 6;
Fig. 8 is a schematic view of an HVDC transmission system according to an embodiment similar to that in Fig. 6;
Fig. 9 is a schematic view of a power flow controller according to an embodiment similar to that in Fig. 7.

### Detailed description

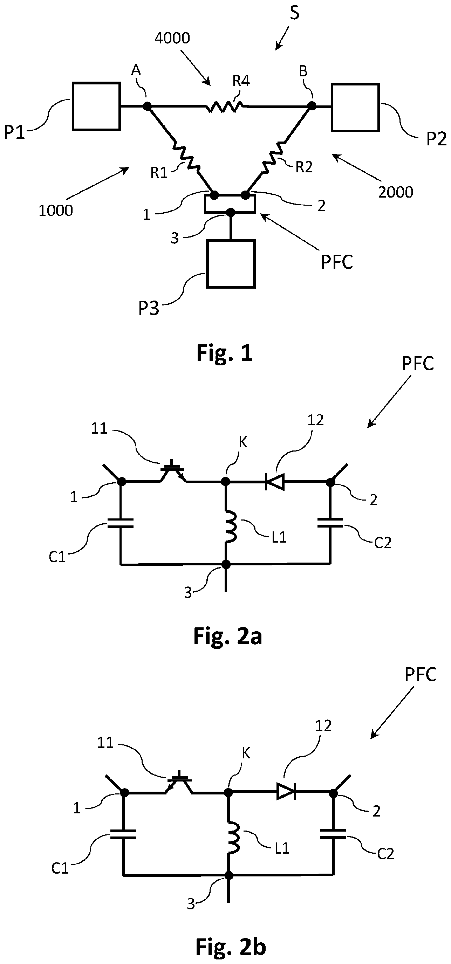

Fig. 1 illustrates an HVDC transmission system S. The HVDC transmission system S comprises a first substation P1, a second substation P2, a third substation P3 and a power flow controller PFC. The HVDC transmission system S further comprises a first HVDC transmission line 1000, a second HVDC transmission line 2000 and a first additional HVDC transmission line 4000. The first HVDC transmission line 1000 has a first resistance R1, the second HVDC transmission line 2000 has a second resistance R2 and the first additional HVDC transmission line 4000 has a first additional resistance R4.

The third substation P3 is connected to the power flow controller PFC. The power flow controller PFC connects the first HVDC transmission line 1000, the second HVDC transmission line 2000 and the third substation P3. The first substation P1 connects the first HVDC transmission line 1000 and the first additional HVDC transmission line 4000 at a point A of the first substation P1. The second substation P2 connects the second HVDC transmission line 2000 and the first additional HVDC transmission line 4000 at a point B of the second substation P2. Each of the first substation P1, the second substation P2, and the third substation P3 has a respective converter configured to convert between DC power and AC power.

The power flow controller PFC comprises a first node 1, a second node 2, and a third node 3. The first node 1 is connectable to the first substation P1 via the first HVDC transmission line 1000. The second node 2 is connectable to the second substation P2 via the second HVDC transmission line 2000. The third node 3 is connectable to the third substation P3.

The power flow controller PFC is configured to control a first power flow in the first HVDC transmission line and a second power flow in the second HVDC transmission line, as further illustrated below. Thus, power congestion in the first HVDC transmission line 1000 and second HVDC transmission line 2000 may be avoided or at least reduced.

The power flow controller PFC in Fig. 1 may be any of the power flow controllers herein illustrated in connection with Figs. 2a to 4, and variations thereof.

Fig. 2a illustrates a power flow controller PFC according to a first embodiment. The power flow controller PFC in Fig. 2a comprises a first node 1, a second node 2, and a third node 3. With reference to Fig. 2a, the first node 1 is connectable to a first substation P1 via a first HVDC transmission line 1000 as illustrated in Fig. 1. With reference to Fig. 2a, the second node 2 is connectable to a second substation P2 via a second HVDC transmission line 2000 as illustrated in Fig. 1. With reference to Fig. 2a, the third node 3 is connectable to a third substation P3 as illustrated in Fig. 1.

The power flow controller PFC in Fig. 2a further comprises a first controllable switch 11 and a first switching element 12. The first controllable switch 11 is connected between the first node 1 and a first connection point K of the power flow controller PFC. The first switching element 12 is connected between the first connection point K and the second node 2. The power flow controller PFC further comprises a first inductor L1, a first capacitive element C1 and a second capacitive element C2. The first inductor L1 is connected between the first connection point K and the third node 3. The first capacitive element C1 is connected between the first node 1 and the third node 3. The second capacitive element C2 is connected between the second node 2 and the third node 3.

In the embodiment shown in Fig. 2a, the first capacitive element C1 and the second capacitive element C2 are a first capacitor and a second capacitor, respectively.

It should be noted that, in any of the embodiments provided in the present disclosure, the capacitive element may be a capacitor. However, alternatives are conceivable. The capacitive element may for example be a supercapacitor or a battery. In any of the embodiments herein provided, the capacitive element is configured to store energy in the form of an electric field.

A voltage over the first capacitive element C1 is hereinafter referred to as a first voltage. Similarly, a voltage over the second capacitive element C2 is hereinafter referred to as a second voltage. As further illustrated below, the power flow controller PFC is configured in such a way that the first voltage and the second voltage have opposite polarities.

By convention, the first voltage is hereinafter assumed to be positive when the first node 1 is at a lower potential as compared to the third node 3. By convention, the second voltage is hereinafter assumed to be positive when the second node 2 is at a higher potential as compared to the third node 3.

In the embodiment in Fig. 2a, the first voltage is negative, i.e. the first node 1 is at a higher potential as compared to the third node 3, and the second voltage is also negative, i.e. the second node 2 is at a lower potential as compared to the third node 3.

In the embodiment shown in Fig. 2a, the first controllable switch 11 is a gate-controlled switch. For example, the gate-controlled switch may be an NPN bipolar junction transistor (BJT).

It should be noted that, in any of the embodiments provided in the present disclosure, a gate controlled switch may be an NPN bipolar junction transistor or, alternatively, another type of transistor, such as a PNP bipolar junction transistor, a metal-oxide-semiconductor field-effect transistor (MOSFET), or an insulated gate bipolar transistor (IGBT). Alternatively, the gate-controlled switch may be a thyristor, or any other type of gate-controlled switch.

In the embodiment shown in Fig. 2a, the first controllable switch 11 may for example comprise a collector, connected to the first node 1, an emitter, connected to the first connection point K, and a base, which is configured to receive a first activation signal. The first controllable switch 11 may be in a conducting state or a non-conducting state, depending on the activation signal and further depending on the voltage between the emitter and the collector.

By controlling a duty cycle of the first activation signal, the first controllable switch 11 may be activated and de-activated. When activated, the first controllable switch 11 may be conducting when the collector is at a sufficiently higher potential as compared to the emitter. In the conducting state, the first controllable switch 11 is configured to support an inflow of current to the first connection point K. Thus, in the conducting state of the first controllable switch 11, current may flow from the collector to the emitter in the direction from the first node 1 to the first connection point K.

In the embodiment shown in Fig. 2a, the first switching element 12 may consist of a diode. Alternatively, the first switching element 12 may comprise other switching elements, including controllable switches.

In the embodiment shown in Fig. 2a, the first switching element 12 comprises an anode, connected to the second node, and a cathode, connected to the first connection point K. The first switching element 12 may be in a conducting state or a non-conducting state. In the conducting state of the first switching element 12, the first switching element 12 is configured to support an inflow of current to the first connection point K. Thus, in the conducting state of the first switching element 12, current may flow from the anode to the cathode in the direction from the second node 2 to the first connection point K.

The power flow controller PFC is configured to control the first power flow and the second power flow by controlling a duty cycle for activation of the first controllable switch 11. In other terms, by controlling the duty cycle of the first activation signal, energy may be transferred between the first capacitive element C1 and the second capacitive element C2 with the first inductor L1 serving as an energy buffer. Thus, the power flow controller PFC is configured to transfer electrical power between the first HVDC transmission line 1000 and the second HVDC transmission line 2000.

The embodiment in Fig. 2a is configured to transfer, energy from the first capacitive element C1 to the second capacitive element C2, as described in the following. As further illustrated below, the first voltage is negative, i.e. the first node 1 is at a higher potential as compared to the third node 3, and the second voltage is also negative, i.e. the second node 2 is at a lower potential as compared to the third node 3.

The energy transfer comprises a first stage and a second stage. In the first stage, the first controllable switch 11 is activated by the first activation signal. Furthermore, the first controllable switch 11 is conducting, and the first switching element 12 is non-conducting. In the first stage, current is flowing through the first capacitive element C1 in the direction from the third node 3 to the first node 1, through the first controllable switch 11 in the direction from the first node 1 to the first connection point K, and through the first inductor L1 in the direction from the first connection point K to the third node 3. Therefore, the first capacitive element C1 is supplying energy, and the first inductor L1 is absorbing energy.

It should be realized that the energy stored in an inductor scales with the square of the current flowing through the inductor. In the first stage, the energy stored in the first inductor L1 is increasing with time. As a result, the current flowing through the first inductor L1 is also increasing with time. Thus, it follows that the voltage over the first inductor L1 is positive, i.e. the first connection point K is at a higher potential as compared to the third node 3. Therefore, the operating condition of the first stage, with the first voltage being negative and the voltage over the first inductor L1 being positive, is compatible with the first controllable switch 11 being conducting such that current flows in the direction from the collector to the emitter.

In the second stage, the first controllable switch 11 is de-activated by the first activation signal. Furthermore, the first controllable switch 11 is non-conducting, and the first switching element 12 is conducting. In the second stage, current is flowing through the second capacitive element C2 in the direction from the third node 3 to the second node 2, through the first switching element 12 in the direction from the second node 2 to the first connection point K, and through the first inductor L1 in the direction from the first connection point K to the third node 3. Thus, the first inductor L1 is supplying energy and the second capacitive element C2 is absorbing energy.

It should be realized that, in the second stage, the energy stored in the first inductor L1 is decreasing with time. As a result, the current flowing through the first inductor L1 is also decreasing with time. Thus, it follows that the voltage over the first inductor L1 is negative, i.e. the first connection point K is at a lower potential as compared to the third node 3. Therefore, the operating condition of the second stage, with the second voltage being negative and the voltage over the first inductor L1 also being negative, is compatible with the first switching element 12 being conducting such that current flows in the direction from the anode to the cathode.

With reference to Fig. 1, it should be realized that the power flow in the first HVDC transmission line 1000, i.e. the first power flow, depends on the first resistance R1 and the voltage over the first HVDC transmission line, i.e. the voltage between the point A and the first node 1. Likewise, the power flow in the second HVDC transmission line 2000, i.e. the second power flow, depends on the second resistance R2 and the voltage over the second HVDC transmission line, i.e. the voltage between the point B and the second node 2.

Referring back to Fig. 2a, it should be noted that the first capacitive element C1 is configured to adjust the voltage over the first HVDC transmission line 1000 by adjusting the potential of the first node 1 relative to the third node 3. In other terms, the first capacitive element C1 is configured to insert the first voltage into the first HVDC transmission line 1000. Thus, the power flow in the first HVDC transmission line 1000 may be adjusted.

As already mentioned, when energy is transferred from the first capacitive element C1 to the second capacitive element C2, the first voltage is negative, i.e. the first node 1 is at a higher potential as compared to the third node 3. The power flow controller PFC is configured in such a way that the insertion of the first voltage decreases the voltage between the point A and the first node 1 when energy is transferred from the first capacitive element C1 to the second capacitive element C2. As a result, the first power flow decreases.

Likewise, the second capacitive element C2 is configured to adjust the voltage over the second HVDC transmission line 2000 by adjusting the potential of the second node 2 relative to the third node 3. In other terms, the second capacitive element C2 is configured to insert the second voltage into the second HVDC transmission line 2000. Thus, the power flow in the second HVDC transmission line 2000 may be adjusted.

As already mentioned, when energy is transferred from the first capacitive element C1 to the second capacitive element C2, the second voltage is negative, i.e. the second node 2 is at a lower potential as compared to the third node 3. The power flow controller PFC is configured in such a way that the insertion of the second voltage increases the voltage between the point B and the second node 2 when energy is transferred from the first capacitive element C1 to the second capacitive element C2. As a result, the second power flow increases.

It will be appreciated that the first activation signal may be a periodic signal. In such a case, the first activation signal is configured to periodically activate and de-activate the first controllable switch 11. Thus, when the first activation signal is a periodic signal, the duty cycle of the first activation signal is the ratio between the time, within a period, during which the activation signal is configured to activate the first controllable switch 11, and the total time duration of the period.

When the first activation signal is a periodic signal, energy may be transferred, in a period of the first activation signal, from the first capacitive element C1 to the first inductor L1, and, subsequently, from the first inductor L1 to the second capacitive element C2.

Fig. 2b illustrates a power flow controller PFC according to an embodiment similar to that shown in Fig. 2a.

A first difference is that, in the embodiment shown in Fig. 2b, the first controllable switch 11, in a conducting state of the first controllable switch 11, is configured to support an outflow of current from the first connection point K. Thus, in the conducting state of the first controllable switch 11, current may flow from the collector to the emitter in the direction from the first connection point K to the first node 1.

A second difference is that, in the embodiment shown in Fig. 2b, the first switching element 12, in a conducting state of the first switching element 12, is configured to support an outflow of current from the first connection point K. Thus, in the conducting state of the first switching element 12, current may flow from the anode to the cathode in the direction from the first connection point K to the second node 2.

Considerations on the embodiment shown in Fig. 2b are analogous, mutatis mutandis, to those made on the embodiment shown in Fig. 2a. The embodiment in Fig. 2b is configured to transfer energy from the first capacitive element C1 to the second capacitive element C2 with the first inductor L1 serving as an energy buffer. However, differently from the embodiment in Fig. 2a, in the embodiment in Fig. 2b the first voltage is positive, i.e. the first node 1 is at a lower potential as compared to the third node 3, and the second voltage is also positive, i.e. the second node 2 is at a higher potential as compared to the third node 3.

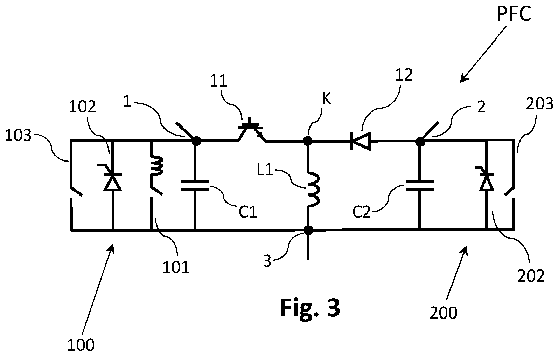

Fig. 3 illustrates a power flow controller PFC according to an embodiment similar to that shown in Fig. 2a.

It will be appreciated that, in any of the embodiments herein provided, the first node 1 and the third node 3 form a first pair of nodes, i.e. a first port. Similarly, in any of the embodiments herein provided, the second node 2 and the third node 3 form a second pair of nodes, i.e. a second port.

A first difference between the embodiment shown in Fig. 3 and that shown in Fig. 2a is that, in the embodiment shown in Fig. 3, the power flow controller PFC further comprises a first protection circuit 100 and a second protection circuit 200.

The first protection circuit 100 comprises a first discharging branch 101, connectable in parallel to the first port. When a fault is detected in the HVDC grid and the first voltage is, in absolute value, larger than a first threshold, the first discharging branch 101, connectable in parallel to the first port, may be activated in order to discharge the first capacitive element C1. The first threshold may be equal to zero, but other values are also conceivable.

The first discharging branch 101 comprises a switch that is open under normal operating conditions. When a fault is detected in the HVDC grid and the first voltage is, in absolute value, larger than the first threshold, the switch of the first discharging branch 101 may be closed such that current flows through the first discharging branch 101, thereby discharging the first capacitive element C1.

The first protection circuit 100 further comprises a first voltage-regulating branch 102, connected in parallel to the first port. In the embodiment shown in Fig. 3, the first voltage-regulating branch is a thyristor. However, other voltage-regulating devices are also conceivable.

When a fault is detected in the HVDC grid and the first voltage is, in absolute value, smaller than the first threshold, the first voltage-regulating branch 102 may be activated in order to prevent the first capacitive element C1 from charging or discharging. Thus, the first voltage is regulated, i.e. maintained at a value within a given deviation from the first threshold.

The second protection circuit 200 comprises a second voltage-regulating branch 202, connectable in parallel to the second port. Considerations made on the first voltage-regulating branch 102 apply, mutatis mutandis, to the second voltage-regulating branch 202.

The first protection circuit 100 further comprises a first bypass branch 103 connectable in parallel to the first port. When a fault is detected in the HVDC grid and the first voltage is, in absolute value, smaller than the first threshold, the first bypass branch 103 may be activated in order to bypass the first capacitive element C1.

The first bypass branch 103 comprises a switch that is open under normal operating conditions. The switch comprised by the first bypass branch 103 may be a mechanical switch, but other types of switches are also conceivable. When a fault is detected in the HVDC grid and the first voltage is, in absolute value, smaller than the first threshold, the switch of the first bypass branch 103 may be closed such that current is diverted through the first bypass branch 101, thereby bypassing the first capacitive element C1.

The second protection circuit 200 comprises a second bypass branch 203, connectable in parallel to the second port. Considerations made on the first bypass branch 103 apply, mutatis mutandis, to the second bypass branch 203.

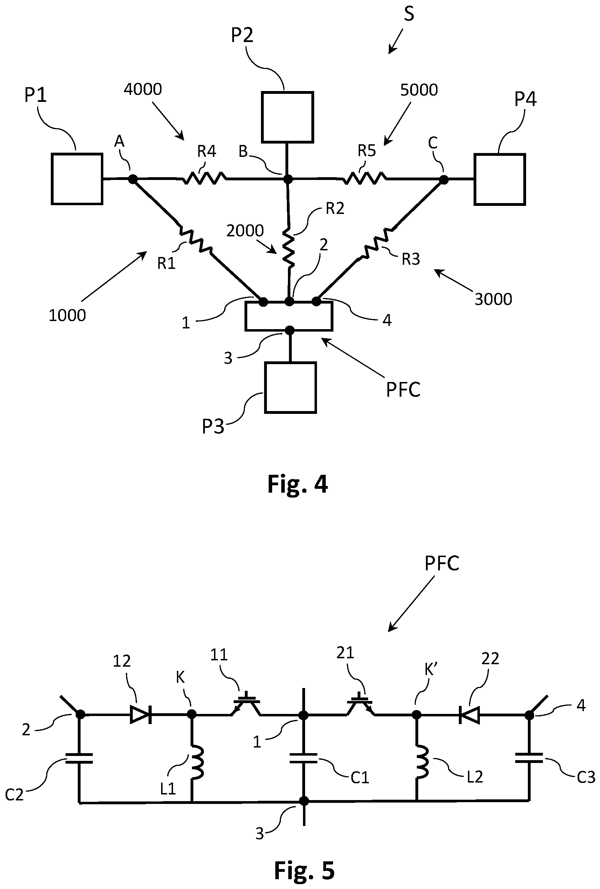

Fig. 4 illustrates an HVDC transmission system S similar to that illustrated in Fig. 1.

As compared to the embodiment shown in Fig. 1, the power flow controller PFC in Fig. 4 further comprises a fourth substation P4, a third HVDC transmission line 3000 and a second additional HVDC transmission line 5000. The third HVDC transmission line 3000 has a third resistance R3. The second additional HVDC transmission line 5000 has a second additional resistance R5.

As compared to the embodiment shown in Fig. 1, the power flow controller PFC in Fig. 4 further connects the first HVDC transmission line 1000, the second HVDC transmission line 2000 and the third substation P3 to the third HVDC transmission line 3000. The fourth substation P4 connects the third HVDC transmission line 3000 and the second additional HVDC transmission line 5000 at a point C of the fourth substation P4.

As compared to the embodiment shown in Fig. 1, the second substation P2 in Fig. 4 further connects the second HVDC transmission line 2000 and the additional HVDC transmission line 4000 to the second additional HVDC transmission line 5000 at the point B of the second substation P2. Similarly to the first substation P1, the second substation P2 and the third substation P3, the fourth substation P4 has a converter configured to convert between DC power and AC power.

As compared to the embodiment shown in Fig. 1, the power flow controller PFC in Fig. 4 further comprises a fourth node 4. The fourth node 4 is connectable to the fourth substation P4 via the third HVDC transmission line 3000.

As compared to the embodiment shown in Fig. 1, the power flow controller PFC in Fig. 4 is further configured to control a third power flow in the third HVDC transmission line 3000, as further illustrated below. Thus, power congestion in at least two of the first HVDC transmission line 1000, second HVDC transmission line 2000 and third HVDC transmission line 3000 may be avoided or at least reduced.

The power flow controller PFC in Fig. 4 may be the power flow controller herein illustrated in connection with Fig. 5, and any variation thereof.

Fig. 5 illustrates a power flow controller PFC according to a second embodiment similar to that shown in Fig. 2a.

As compared to the embodiment shown in Fig. 2a, the power flow controller PFC in Fig. 5 further comprises a second controllable switch 21, a second switching element 22, a second inductor L2 and a third capacitive element C3.

The second controllable switch 21 is connected to the second switching element 22 at a second connection point K' of the power flow controller PFC. The second controllable switch 21 is further connected to the first node 1. The second switching element 22 is further connected to a fourth node 4 of the power flow controller PFC. The fourth node 4 is connectable to a fourth substation P4 of the HVDC transmission system via a third HVDC transmission line 3000, as illustrated in Fig. 4.

The second inductor L2 is connected between the second connection point K' and the third node 3. The third capacitive element C3 is connected between the third node 3 and the fourth node 4.

The second controllable switch 21 is configured to receive a second activation signal. The second controllable switch 21 may be in a conducting state or a non-conducting state. In the conducting state of the second controllable switch 21, the second controllable switch 21 is configured to support an inflow of current to the second connection point K'. Thus, in the conducting state of the second controllable switch 21, current may flow through the second controllable switch 21 in the direction from the first node 1 to the second connection point K'. Considerations made on the first controllable switch 11 in connection with Fig. 2a apply, mutatis mutandis, to the second controllable switch 21.

In the embodiment shown in Fig. 5, the second switching element 22 consists of a diode. Alternatively, the second switching element 22 may comprise other switching elements, including controllable switches. The second switching element 22 may be in a conducting state or a non-conducting state. In the conducting state of the second switching element 22, the second switching element 22 is configured to support an inflow of current to the second connection point K'. Thus, in the conducting state of the second switching element 22, current may flow through the second switching element 22 in the direction from the fourth node 4 to the second connection point K'. Considerations made on the first switching element 12 in connection with Fig. 2a apply, mutatis mutandis, to the second switching element 22.

In the embodiment shown in Fig. 5, a third voltage is a voltage over the third capacitive element C3, i.e. a potential difference between the fourth node 4 and the third node 3. The power flow controller PFC is configured in such a way that the first voltage and the third voltage have opposite polarities.

In the embodiment shown in Fig. 5, by convention, the third voltage is assumed to be positive when the fourth node is at a lower potential as compared to the third node.

In the embodiment in Fig. 5, the first voltage is negative, i.e. the first node 1 is at a higher potential as compared to the third node 3. The second voltage is positive, i.e. the second node 2 is at a lower potential as compared to the third node 3. The third voltage is positive, i.e. the fourth node 4 is at a lower potential as compared to the third node 3.

In the embodiment in Fig. 5, the third capacitive element C3 is configured to insert the third voltage into the third HVDC transmission line 3000. Thus, as already illustrated for the first HVDC transmission line and the second HVDC transmission line in connection with Fig. 2a, the power flow in the third HVDC transmission line, i.e. the third power flow, may be adjusted.

Considerations made on energy transfers between the first capacitive element C1 and the second capacitive element C2 in connection with Fig. 2a, with the first inductor L1 serving as an energy buffer, apply, mutatis mutandis, to energy transfers between the first capacitive element C1 and the third capacitive element C3 with the second inductor L2 serving as an energy buffer. Thus, as compared to the embodiment shown in Fig. 2a, the power flow controller PFC in Fig. 5 is further configured to transfer electrical power between the first HVDC transmission line 1000 and the third HVDC transmission line 3000 by controlling a duty cycle for the activation of the second controllable switch 21.

Considerations made on the first activation signal in connection to Fig. 2a apply, mutatis mutandis, to the second activation signal.

It will be appreciated that, in any of the embodiments herein provided, a device, such as a controllable switch, a switching element, a capacitive element or an inductor, is said to be connected to a node when the device is directly connected to the node. In other terms, current flowing through the device may directly flow to the node, or out of the node, without flowing first, in either case, through another device, and at least not through a branching point, i.e. not through another node at which electrical branches meet.

Other embodiments (not explicitly shown) are also provided. These embodiments are obtained from the embodiment in Fig. 5 through permutations of the first switching element 12, the first controllable switch 11, the second controllable switch 21 and the second switching element 22 among the second node 2, the first connection point K, the first node 1, the second connection point K' and the fourth node 4.

For instance, according to one of these permutations, the first controllable switch 11 and the first switching element 12 are connected as shown in Fig. 5, whereas the second controllable switch 21 is connected between the second node 2 and the second connection point K', and the second switching element 22 is connected between the second connection point K' and the fourth node 4. Other possible permutations are specified in the summary.

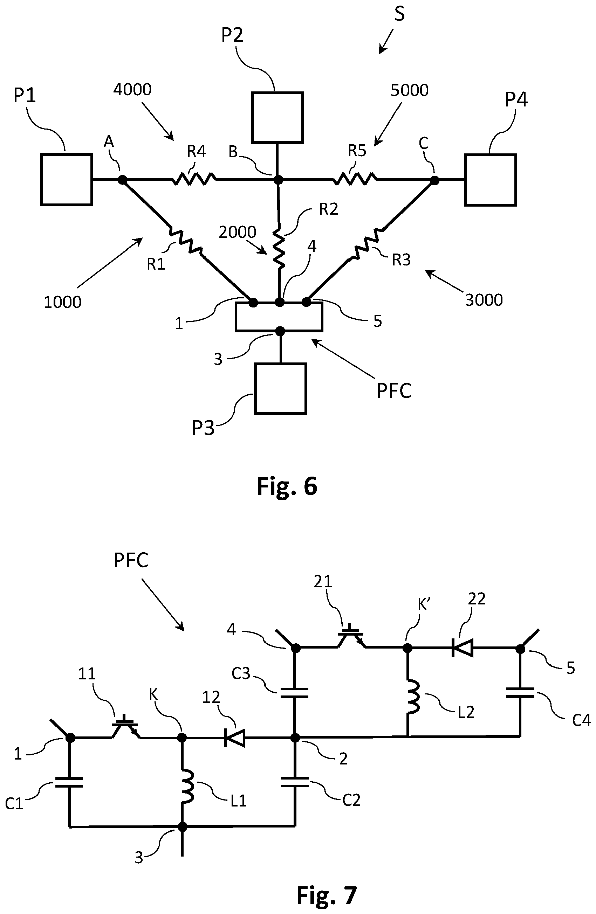

Fig. 6 illustrates an HVDC transmission system S similar to that described with reference to Fig. 4.

A first difference is that the fourth node 4 of the power flow controller PFC in Fig. 6 is connectable to the second substation P2 via the second HVDC transmission line 2000.

A second difference is that the power flow controller PFC in Fig. 6 further comprises a fifth node 5. The fifth node 5 is connectable to the fourth substation P4 via the third HVDC transmission line 3000.

The power flow controller PFC in Fig. 6 may be the power flow controller herein illustrated in connection with Fig. 7, and any variation thereof.

Fig. 7 illustrates a power flow controller PFC according to an embodiment similar to those described with reference to Fig. 2a and Fig. 5.

As compared to the embodiment shown in Fig. 2a, the power flow controller PFC in Fig. 7 further comprises a second controllable switch 21, a second switching element 22, a third capacitive element C3, a second inductor L2 and a fourth capacitive element C4.

The third capacitive element C3 is connected between the second node 2 and a fourth node 4 of the power flow controller PFC. With reference to Fig. 7, the fourth node 4 is connectable to the second substation P2 via the second HVDC transmission line 2000 as illustrated in Fig. 6. It should be noted that the second node 2 is connected to the fourth node 4 via the third capacitive element C3. Thus, the second node 2 is also connectable to the second substation P2 via the second HVDC transmission line 2000.

The second controllable switch 21 is connected to the second switching element 22 at a second connection point K' of the power flow controller PFC. The second controllable switch 21 is further connected to the fourth node 4. The second switching element 22 is further connected to a fifth node 5 of the power flow controller PFC. With reference to Fig. 7, the fifth node 5 is connectable to a fourth substation P4 of the HVDC transmission system via a third HVDC transmission line 3000 as illustrated in Fig. 6.

The second inductor L2 is connected between the second connection point K' and the second node 2.

In the embodiment shown in Fig. 7, the second controllable switch 21 is configured to receive a second activation signal. The second controllable switch 21 may be in a conducting state or a non-conducting state. In the conducting state of the second controllable switch 21, the second controllable switch 21 is configured to support an inflow of current to the second connection point K'. Thus, in the conducting state of the second controllable switch 21, current may flow through the second controllable switch 21 in the direction from the fourth node 4 to the second connection point K'. Considerations made on the first controllable switch 11 in connection with Fig. 2a apply, mutatis mutandis, to the second controllable switch 21.

In the embodiment shown in Fig. 7, the second switching element 22 consists of a diode. Alternatively, the second switching element 22 may comprise other switching elements, including controllable switches. The second switching element 22 may be in a conducting state or a non-conducting state. In the conducting state of the second switching element 22, the second switching element 22 is configured to support an inflow of current to the second connection point K'. Thus, in the conducting state of the second switching element 22, current may flow through the second switching element 22 in the direction from the fifth node 5 to the second connection point K'. Considerations made on the first switching element 12 in connection with Fig. 2a apply, mutatis mutandis, to the second switching element 22.

In the embodiment shown in Fig. 7, a third voltage is a voltage over the third capacitive element C3, i.e. a potential difference between the fourth node 4 and the second node 2. In the embodiment shown in Fig. 7, a fourth voltage is a voltage over the fourth capacitive element C4, i.e. a potential difference between the fifth node 5 and the second node 2.

The power flow controller PFC is configured in such a way that the third voltage and the fourth voltage have opposite polarities.

In the embodiment in Fig. 7, by convention, the third voltage is assumed to be positive when the fourth node 4 is at a lower potential as compared to the second node 2. Likewise, by convention, the fourth voltage is assumed to be positive when the fifth node 5 is at a higher potential as compared to the second node 2.

In the embodiment shown in Fig. 7, the third capacitive element C3 and the fourth capacitive element C4 are configured to insert, respectively, the third voltage into the second HVDC transmission line 2000 and the fourth voltage into the third HVDC transmission line 3000.

In the embodiment in Fig. 7, the first voltage and the second voltage have the same sign as the first voltage and the second voltage, respectively, in the embodiment in Fig. 2a. Thus, the first node 1 is at a higher potential as compared to the third node 3, and the second node 2 is at a lower potential as compared to the third node 3. In the embodiment in Fig. 7, the third voltage and the fourth voltage have the same sign as the first voltage and the second voltage, respectively, in the embodiment in Fig. 2a. Thus, the fourth node 4 is at a higher potential as compared to the second node 2, and the fifth node 5 is at a lower potential as compared to the second node 2.

Thus, as already illustrated for the first HVDC transmission line 1000 and the second HVDC transmission line 2000 in connection with Fig. 2a, the power flow in the third HVDC transmission line 3000, i.e. the third power flow, may be adjusted. It should be also noted that the second capacitive element C2 and the third capacitive element C3 are configured such that the second voltage and third voltage are subtracted from one another when inserted into the second HVDC transmission line 2000. As a result, the potential of the fourth node 4 relative to the third node 3 is adjusted, thereby adjusting the second power flow in the second HVDC transmission line 2000.

Considerations made on energy transfers between the first capacitive element C1 and the second capacitive element C2 in connection with Fig. 2a, with the first inductor L1 serving as an energy buffer, apply, mutatis mutandis, to energy transfers between the third capacitive element C3 and the fourth capacitive element C4 with the second inductor L2 serving as an energy buffer. Considerations made on the first activation signal in connection to Fig. 2a apply, mutatis mutandis, to the second activation signal.

Another embodiment (not explicitly shown) is also provided. This embodiment is obtained from the embodiment in Fig. 7 through a permutation of the second controllable switch 21 and the second switching element 22. This alternative embodiment differs from the embodiment shown in Fig. 7 in that the second switching element 22 is connected between the fourth node 4 and the second connection point K', and the second controllable switch 21 is connected between the second connection point K' and the fifth node 5.

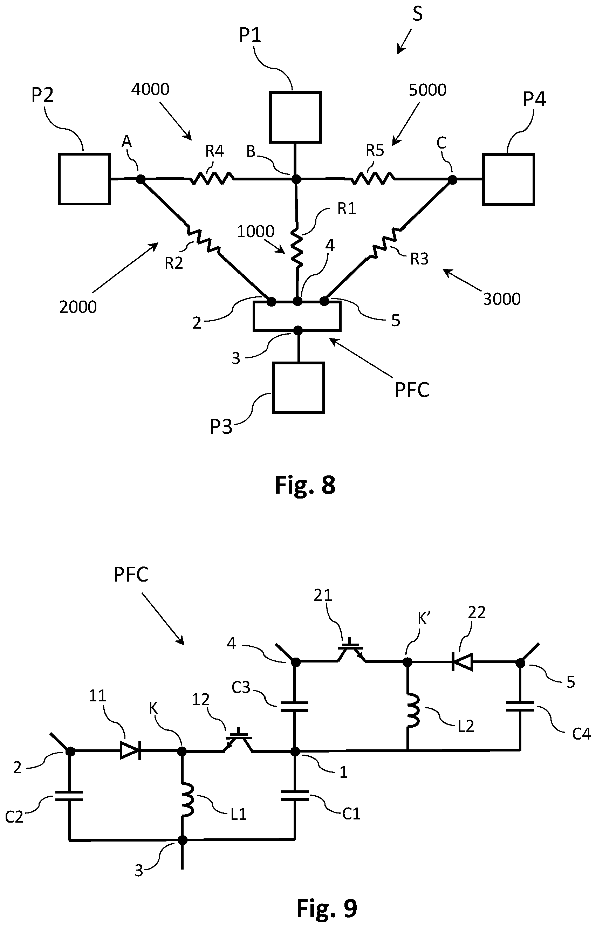

Fig. 8 illustrates an HVDC transmission system S similar to that described with reference to Fig. 4.

A first difference is that the fourth node 4 of the power flow controller PFC in Fig. 8 is connectable to the first substation P1 via the first HVDC transmission line 1000.

A second difference is that the power flow controller PFC in Fig. 8 further comprises a fifth node 5. The fifth node 5 is connectable to the fourth substation P4 via the third HVDC transmission line 3000.

The power flow controller PFC in Fig. 8 may be the power flow controller herein illustrated in connection with Fig. 9, and any variation thereof.

Fig. 9 illustrates a power flow controller PFC according to an embodiment similar to those described with reference to Fig. 2a and Fig. 7.

As compared to the embodiment shown in Fig. 2a, the power flow controller PFC in Fig. 9 further comprises a second controllable switch 21, a second switching element 22, a third capacitive element C3, a second inductor L2 and a fourth capacitive element C4.

The third capacitive element C3 is connected between the first node 1 and a fourth node 4 of the power flow controller PFC. With reference to Fig. 9, the fourth node 4 is connectable to the first substation P1 via the first HVDC transmission line 1000 as illustrated in Fig. 8. It should be noted that the first node 1 is connected to the fourth node 4 via the third capacitive element C3. Thus, the first node 1 is also connectable to the first substation P1 via the first HVDC transmission line 1000.

The second controllable switch 21 is connected to the second switching element 22 at a second connection point K' of the power flow controller PFC. The second controllable switch 21 is further connected to the fourth node 4. The second switching element 22 is further connected to a fifth node 5 of the power flow controller PFC. With reference to Fig. 9, the fifth node 5 is connectable to a fourth substation P4 of the HVDC transmission system via a third HVDC transmission line 3000 as illustrated in Fig. 8.

The second inductor L2 is connected between the second connection point K' and the first node 1.

In the embodiment shown in Fig. 9, the second controllable switch 21 is configured to receive a second activation signal. The second controllable switch 21 may be in a conducting state or a non-conducting state. In the conducting state of the second controllable switch 21, the second controllable switch 21 is configured to support an inflow of current to the second connection point K'. Thus, in the conducting state of the second controllable switch 21, current may flow through the second controllable switch 21 in the direction from the fourth node 4 to the second connection point K'. Considerations made on the first controllable switch 11 in connection with Fig. 2a apply, mutatis mutandis, to the second controllable switch 21.

In the embodiment shown in Fig. 9, the second switching element 22 consists of a diode. Alternatively, the second switching element 22 may comprise other switching elements, including controllable switches. The second switching element 22 may be in a conducting state or a non-conducting state. In the conducting state of the second switching element 22, the second switching element 22 is configured to support an inflow of current to the second connection point K'. Thus, in the conducting state of the second switching element 22, current may flow through the second switching element 22 in the direction from the fifth node 5 to the second connection point K'. Considerations made on the first switching element 12 in connection with Fig. 2a apply, mutatis mutandis, to the second switching element 22.

In the embodiment shown in Fig. 9, a third voltage is a voltage over the third capacitive element C3, i.e. a potential difference between the fourth node 4 and the first node 1. In the embodiment shown in Fig. 9, a fourth voltage is a voltage over the fourth capacitive element C4, i.e. a potential difference between the fifth node 5 and the first node 1.

The power flow controller PFC is configured in such a way that the third voltage and the fourth voltage have opposite polarities.

In the embodiment shown in Fig. 9, by convention, the third voltage is assumed to be positive when the fourth node 4 is at a lower potential as compared to the first node 1. Likewise, by convention, the fourth voltage is assumed to be positive when the fifth node 5 is at a higher potential as compared to the first node 1.

In the embodiment shown in Fig. 9, the third capacitive element C3 and the fourth capacitive element C4 are configured to insert, respectively, the third voltage into the first HVDC transmission line 1000 and the fourth voltage into the third HVDC transmission line 3000.

In the embodiment in Fig. 9, the first voltage and the second voltage have the same sign as the first voltage and the second voltage, respectively, in the embodiment in Fig. 2a. Thus, the first node 1 is at a higher potential as compared to the third node 3, and the second node 2 is at a lower potential as compared to the third node 3. In the embodiment in Fig. 9, the third voltage and the fourth voltage have the same sign as the first voltage and the second voltage, respectively, in the embodiment in Fig. 2a. Thus, the fourth node 4 is at a higher potential as compared to the first node 1, and the fifth node 5 is at a lower potential as compared to the first node 1.

Thus, as already illustrated for the first HVDC transmission line 1000 and the second HVDC transmission line 2000 in connection with Fig. 2a, the power flow in the third HVDC transmission line 3000, i.e. the third power flow, may be adjusted. It should be also noted that the first capacitive element C1 and the third capacitive element C3 are configured such that the first voltage and third voltage are added to each other, or subtracted from one another, when inserted into the first HVDC transmission line 1000. As a result, the potential of the fourth node 4 relative to the third node 3 is adjusted, thereby adjusting the first power flow in the first HVDC transmission line 1000.

Considerations made on energy transfers between the first capacitive element C1 and the second capacitive element C2 in connection with Fig. 2a, with the first inductor L1 serving as an energy buffer, apply, mutatis mutandis, to energy transfers between the third capacitive element C3 and the fourth capacitive element C4 with the second inductor L2 serving as an energy buffer. Considerations made on the first activation signal in connection to Fig. 2a apply, mutatis mutandis, to the second activation signal.

Another embodiment (not explicitly shown) is also provided. This embodiment is obtained from the embodiment in Fig. 9 through a permutation of the second controllable switch 21 and the second switching element 22. This alternative embodiment differs from the embodiment shown in Fig. 9 in that the second switching element 22 is connected between the fourth node 4 and the second connection point K', and the second controllable switch 21 is connected between the second connection point K' and the fifth node 5.

In the above, the inventive concept has mainly been described with reference to a limited number of examples. However, as it is readily appreciated by a person skilled in the art, other examples than the ones disclosed above are equally possible within the scope of the inventive concept, as defined by the appended claims.

It will be appreciated that, in any of the embodiments herein provided and any variation thereof, any pair of nodes forms a port. Therefore, in any of the embodiments herein provided and any variation thereof, a protection circuit, similar to any of the first protection circuit and second protection circuit disclosed in connection to Fig. 3, may be provided to any one of the ports having both nodes of the pair of nodes connected to a capacitive element.

## Claims

1. A power flow controller (PFC), PFC, for controlling power flow within a high voltage direct current, HVDC, transmission system (S), said power flow controller (PFC) comprising:
a first node (1), a second node (2) and a third node (3), wherein the first node (1) is connectable to a first substation (P1) of the HVDC transmission system (S) via a first HVDC transmission line (1000), the second node (2) is connectable to a second substation (P2) of the HVDC transmission system (S) via a second HVDC transmission line (2000) and the third node (3) is connectable to a third substation (P3) of the HVDC transmission system;
a first controllable switch (11) and a first switching element (12), wherein the first controllable switch (11) is connected between the first node (1) and a first connection point (K) of the power flow controller (PFC), and the first switching element (12) is connected between the first connection point (K) and the second node (2);
a first inductor (L1) connected between the first connection point (K) and the third node (3);
a first capacitive element (C1) connected between the first node (1) and the third node (3); and
a second capacitive element (C2) connected between the second node (2) and the third node (3);
wherein the power flow controller (PFC) is configured to control a first power flow in the first HVDC transmission line (1000) and a second power flow in the second HVDC transmission line (2000) by controlling a duty cycle for activation of the first controllable switch (11).

2. The power flow controller (PFC) according to claim 1, wherein, in a conducting state of the first controllable switch (11), the first controllable switch (11) is configured to support an inflow of current to the first connection point (K), and, in a conducting state of the first switching element (12), the first switching element (12) is configured to support an inflow of current to the first connection point (K).

3. The power flow controller (PFC) according to any of the preceding claims, wherein, in a conducting state of the first controllable switch (11), the first controllable switch (11) is configured to support an outflow of current from the first connection point (K), and, in a conducting state of the first switching element (12), the first switching element (12) is configured to support an outflow of current from the first connection point (K).

4. The power flow controller (PFC) according to any of the preceding claims, wherein the first node (1) and the third node (3) form a first port, the second node (2) and the third node (3) form a second port, and the power flow controller (PFC) further comprises at least one of the following:
a first protection circuit (100) comprising a first discharging branch (101) connectable in parallel to the first port; and
a second protection circuit (200) comprising a second discharging branch connectable in parallel to the second port.

5. The power flow controller (PFC) according to claim 4, wherein at least one of the following applies:
the first protection circuit (100) further comprises a first bypass branch (103) connectable in parallel to the first port; and
the second protection circuit (200) further comprises a second bypass branch (203) connectable in parallel to the second port.

6. The power flow controller (PFC) according to any of the preceding claims, wherein the power flow controller (PFC) further comprises:
a second controllable switch (21), a second switching element (22), and a second inductor (L2), wherein the second controllable switch (21) is connected to the second switching element (22) at a second connection point (K') of the power flow controller (PFC) and the second inductor (L2) is connected between the second connection point (K') and the third node (3); and
a third capacitive element (C3), connected between the third node (3) and a fourth node (4) of the power flow controller (PFC), wherein the fourth node (4) is connectable to a fourth substation (P4) of the HVDC transmission system (S) via a third HVDC transmission line (3000);
wherein one of the following alternatives applies:
either the second controllable switch (21) is further connected to the first node (1) and the second switching element (22) is further connected to the fourth node (4); or
the second controllable switch (21) is further connected to the second node (2) and the second switching element (22) is further connected to the fourth node (4); or
the second switching element (22) is further connected to the first node (1) and the second controllable switch (21) is further connected to the fourth node (4); or
the second switching element (22) is further connected to the second node (2) and the second controllable switch (21) is further connected to the fourth node (4);
and wherein the power flow controller (PFC) is further configured to control a third power flow in the third HVDC transmission line (3000) by controlling a duty cycle for activation of the second controllable switch (21).

7. The power flow controller (PFC) according to any of the preceding claims, wherein the power flow controller (PFC) further comprises:
a third capacitive element (C3), connected between the second node (2) and a fourth node (4) of the power flow controller (PFC), the fourth node (4) being connectable to the second substation (P2) via the second HVDC transmission (2000, 1000) line;
a fourth capacitive element (C4), connected between the second node (2) and a fifth node (5) of the power flow controller (PFC), wherein the fifth node (5) is connectable to a fourth substation (P4) of the HVDC transmission system (S) via a third HVDC transmission line (3000);
a second controllable switch (21), a second switching element (22) and a second inductor (L2), wherein the second controllable switch (21) is connected to the second switching element (22) at a second connection point (K') of the power flow controller (PFC) and the second inductor (L2) is connected between the second connection point (K') and the second node (2); and
wherein one of the following alternatives applies:
either the second controllable switch (21) is further connected to the fourth node (4) and the second switching element (22) is further connected to the fifth node (5); or
the second switching element (22) is further connected to the fourth node (4) and the second controllable switch (21) is further connected to the fifth node (5);
and wherein the power flow controller (PFC) is further configured to control a third power flow in the third HVDC transmission line (3000) by controlling a duty cycle for activation of the second controllable switch (21).

8. The power flow controller (PFC) according to any of claims 1-6,
wherein the power flow controller (PFC) further comprises:
a third capacitive element (C3), connected between the first node (1) and a fourth node (4) of the power flow controller (PFC), the fourth node (4) being connectable to the first substation (P1) via the first HVDC transmission line (1000);
a fourth capacitive element (C4), connected between the first node (1) and a fifth node (5) of the power flow controller (PFC), wherein the fifth node (5) is connectable to a fourth substation (P4) of the HVDC transmission system via a third HVDC transmission line (3000);
a second controllable switch (21), a second switching element (22) and a second inductor (L2), wherein the second controllable switch (21) is connected to the second switching element (22) at a second connection point (K') of the power flow controller (PFC) and the second inductor (L2) is connected between the second connection point (K') and the first node (1);
and
wherein one of the following alternatives applies:
either the second controllable switch (21) is further connected to the fourth node (4) and the second switching element (22) is further connected to the fifth node (5); or
the second switching element (22) is further connected to the fourth node (4) and the second controllable switch (21) is further connected to the fifth node (5);
and wherein the power flow controller (PFC) is further configured to control a third power flow in the third HVDC transmission line (3000) by controlling a duty cycle for activation of the second controllable switch (21).

9. The power flow controller (PFC) according to any of claims 6-8, wherein, in a conducting state of the second controllable switch (21), the second controllable switch (21) is configured to support an inflow of current to the second connection point (K'), and, in a conducting state of the second switching element (22), the second switching element (22) is configured to support an inflow of current to the second connection point (K').

10. The power flow controller (PFC) according to any of claims 6-9, wherein, in a conducting state of the second controllable switch (21), the second controllable switch (21) is configured to support an outflow of current from the second connection point (K'), and, in a conducting state of the second switching element (22), the second switching element (22) is configured to support an outflow of current from the second connection point (K').

11. The power flow controller (PFC) according to any of the preceding claims, wherein at least one of the following applies:
the first switching element (12) consists of a first diode (121); and
the second switching element (22) consists of a second diode (221).

12. A high voltage direct current, HVDC, transmission system (S) comprising:
a first substation (P1);
a second substation (P2);
a third substation (P3); and
a power flow controller (PFC) according to any one of the preceding claims, wherein:
the power flow controller (PFC) connects a first HVDC transmission line (1000), a second HVDC transmission line (2000) and the third substation (P3);
the first substation (P1) connects the first HVDC transmission line (1000) and a first additional HVDC transmission line (4000);
the second substation (P2) connects the second HVDC transmission line (2000) and the first additional HVDC transmission line (4000); and
each of the first substation (P1), the second substation (P2) and the third substation (P3) has a respective converter configured to convert between DC power and AC power.
